# DEMANDE DE BREVET EUROPEEN

(11) **EP 0 718 778 A1**
(43) Date de publication de la demande: **26.06.1996**
(21) Numéro de dépôt: 95203456.9
(22) Date de dépôt: 12.12.1995
(51) Int. Cl.: G06F 13/42

(54) **Procédure de transmission de données par bus**

(30) Priorité: 21.12.1994 FR 9415411
(71) Demandeur: PHILIPS ELECTRONIQUE GRAND PUBLIC, 92150 Suresnes (FR); PHILIPS ELECTRONICS N.V., 5621 BA Eindhoven (NL)
(72) Inventeur: Hermer, Jean-Pierre, Société Civile S.P.I.D., F-75008 Paris (FR)
(74) Mandataire: Caron, Jean

(57) **Abrégé**

La procédure s'applique, avec un bus à deux conducteurs, dans un système qui comporte seulement un maître et un esclave. Avant la génération d'une procédure de "start" de type habituel, le maître qui demande le dialogue tire le conducteur d'horloge à zéro pendant un temps limité mais assez long (2-3), par exemple supérieur à 1 mS, et tire aussi le conducteur de données à zéro. L'esclave répond en tirant à son tour le conducteur d'horloge à zéro (5) pendant un temps du même ordre de grandeur, après quoi le maître remonte le conducteur de données (6) et initie une procédure start habituelle (7). Dans le cas où c'est l'esclave qui demande le dialogue, seul le conducteur d'horloge est tiré à zéro pendant la première phase.

Applications : Récepteurs de radio pour automobile.

## Description

La présente invention concerne une procédure de transmission de données par bus à deux conducteurs, utilisée dans un dispositif comprenant
- une station maître permettant de gérer l'émission et la réception de données, avec une borne de données et une borne d'horloge,
- une station esclave permettant l'émission et la réception de données, avec une borne de données et une borne d'horloge,
- un conducteur de données qui relie entre elles les bornes de données des stations,
- un conducteur d'horloge qui relie entre elles les bornes d'horloge des stations,
- des moyens pour maintenir les conducteurs du bus à un premier niveau de tension en l'absence de forçage par les stations,
chacune des stations pouvant forcer un des conducteurs du bus à un deuxième niveau de tension, et la station maître pouvant produire un signal de départ, indiquant qu'elle est prête à gérer la transmission de données.

Elle concerne aussi un dispositif de transmission de données par bus comprenant :
- une station maître comportant un microprocesseur, permettant de gérer l'émission et la réception de données, avec une borne de données et une borne d'horloge,
- une station esclave comportant un microprocesseur, permettant l'émission et la réception de données, avec une borne de données et une borne d'horloge,
- un conducteur de données qui relie entre elles les bornes de données des stations,
- un conducteur d'horloge qui relie entre elles les bornes d'horloge des stations,
- des moyens pour maintenir les conducteurs du bus à un premier niveau de tension en l'absence de forçage par les stations,
- dans chacune des stations, des moyens pour forcer un des conducteurs du bus à un deuxième niveau de tension, et
- dans la station maître, des moyens pour produire un signal de départ indiquant qu'elle est prête à gérer la transmission de données.

Un tel dispositif est utilisé par exemple dans des systèmes comportant au moins deux modules équipés d'un processeur, devant communiquer entre eux.

Un dispositif conforme au préambule ci-dessus est décrit dans le brevet US-P-4,689,740. Le protocole utilisé est celui connu depuis sous le nom de "I²C". Selon ce protocole l'émission de données peut commencer pratiquement au temps d'horloge suivant le signal de départ, et l'horloge peut avoir une fréquence aussi haute que 400 kHz.

L'invention concerne plus particulièrement des systèmes sophistiqués embarqués dans les automobiles, dans lesquels un grand nombre de possibilités d'utilisation est offert, et qui sont donc munis d'une pluralité d'éléments devant communiquer entre eux. On désire réaliser par des moyens logiciels un protocole de dialogue par bus destiné à la communication entre deux microprocesseurs. Or les processeurs de ces éléments ont un grand nombre de tâches à réaliser, et on ne peut envisager qu'ils puissent scruter un conducteur à chaque temps d'une horloge à 400 kHz pour détecter un signal de départ, car ils n'auraient alors plus assez de temps pour exécuter leurs propres tâches.

Un objet de l'invention est de résoudre ce problème, sans ajouter de conducteur supplémentaire au bus.
A cet effet, avant la production d'un signal de départ,
la station maître
   - force sa borne d'horloge puis sa borne de données au second niveau de tension,
   - maintient ensuite sa borne d'horloge au second niveau de tension pendant une première durée prédéterminée, puis la laisse retourner au premier niveau,
la station esclave
   - teste si sa borne d'horloge et sa borne de données sont au second niveau de tension, et en ce cas
   - détecte ensuite lorsque sa borne d'horloge retourne au premier niveau de tension,
   - et force alors sa borne d'horloge au second niveau de tension pendant une seconde durée prédéterminée puis la laisse retourner au premier niveau,
et pendant ce temps la station maître
   - détecte que sa borne d'horloge est maintenue au second niveau de tension pendant la dite seconde durée prédéterminée et qu'elle retourne ensuite au premier niveau,
   - et laisse alors sa borne de données retourner au premier niveau,
et le dit signal de départ est alors engendré.

L'invention est donc basée sur l'idée d'utiliser d'abord un protocole spécifique lent défini pour un usage particulier, et de passer ensuite à un protocole classique, plus rapide et pour lequel beaucoup de circuits du commerce sont prévus. En outre il est avantageux que, avant la production d'un signal de départ :
la station esclave
   - force sa borne d'horloge au second niveau de tension,
   - maintienne ensuite sa borne d'horloge au second niveau de tension pendant une troisième durée prédéterminée, puis la laisse retourner au premier niveau,
la station maître
   - teste si sa borne d'horloge est au second niveau de tension, et en ce cas
   - détecte ensuite lorsque sa borne d'horloge retourne au premier niveau de tension,
   - et force alors sa borne d'horloge au second niveau de tension pendant une quatrième durée prédéterminée puis la laisse retourner au premier niveau,
et le dit signal de départ est alors engendré.
et pendant ce temps la station esclave
   - détecte que sa borne d'horloge est maintenue au second niveau de tension pendant la dite quatrième durée prédéterminée et qu'elle retourne ensuite au premier niveau,
   - et attend alors le signal de départ généré par le maître pour émettre des données en synchronisme avec l'horloge générée par le maître.
Ainsi, du fait que la procédure est différente quand c'est un esclave qui demande le dialogue, il est facile de gérer un conflit entre des demandes de dialogue arrivant au même moment de la part de l'esclave et du maître.

Un dispositif selon l'invention est notamment remarquable en ce que,
- afin de générer un signal de demande de dialogue, le microprocesseur de la station maître comporte des moyens logiciels
   - pour forcer sa borne d'horloge puis sa borne de données au second niveau de tension,
   - pour maintenir ensuite sa borne d'horloge au second niveau de tension pendant une première durée prédéterminée, puis la laisser retourner au premier niveau,
- afin de répondre à un signal de demande de dialogue de la part du maître, le microprocesseur de la station esclave comporte des moyens logiciels
   - pour détecter si sa borne d'horloge et sa borne de données sont au second niveau de tension,
   - pour détecter que sa borne d'horloge est retournée au premier niveau de tension après avoir détecté qu'elle était au second niveau de tension,
   - et pour forcer alors sa borne d'horloge au second niveau de tension pendant une seconde durée prédéterminée puis la laisser retourner au premier niveau ensuite,
- le microprocesseur de la station maître comporte en outre des moyens logiciels
   - pour, après avoir généré le signal de demande de dialogue de la part du maître, détecter que sa borne d'horloge est maintenue au second niveau de tension pendant la dite seconde durée prédéterminée et qu'elle retourne ensuite au premier niveau,
   - et pour laisser alors sa borne de données retourner au premier niveau puis engendrer alors le dit signal de départ.

En outre, un dispositif selon l'invention est également remarquable en ce que :
- afin de générer un signal de demande de dialogue de la part de l'esclave, le microprocesseur de la station esclave comporte des moyens logiciels
   - pour forcer sa borne d'horloge au second niveau de tension,
   - pour maintenir ensuite sa borne d'horloge au second niveau de tension pendant une première durée prédéterminée, puis la laisser retourner au premier niveau,
- afin de répondre à un signal de demande de dialogue de la part de l'esclave, le microprocesseur de la station maître comporte des moyens logiciels
   - pour détecter si sa borne d'horloge est au second niveau de tension,
   - pour détecter que sa borne d'horloge est retournée au premier niveau de tension après avoir détecté qu'elle était au second niveau de tension,
   - et pour forcer alors sa borne d'horloge au second niveau de tension pendant une seconde durée prédéterminée puis la laisser retourner au premier niveau ensuite,
   et le dit signal de départ est alors engendré.
- le microprocesseur de la station esclave comporte des moyens logiciels
   - pour, après avoir généré un signal de demande de dialogue de la part de l'esclave, détecter que sa borne d'horloge est maintenue au second niveau de tension pendant la dite seconde durée prédéterminée et qu'elle retourne ensuite au premier niveau,
   - pour détecter alors le signal de départ généré par le maître et pour émettre ensuite des données en synchronisme avec l'horloge générée par le maître.

Un récepteur de radio pour automobile est avantageusement muni d'un dispositif selon l'invention.

Ces aspects de l'invention ainsi que d'autres aspects plus détaillés apparaîtront plus clairement grâce à la description suivante d'un mode de réalisation constituant un exemple non limitatif.
La figure 1 est un schéma d'un récepteur de radio pour automobile muni d'un dispositif selon l'invention.
La figure 2 représente pour mémoire les signaux au cours d'une procédure I²C connue.
La figure 3 représente les signaux apparaissant lors d'une demande de dialogue par le maître.
La figure 4 représente les signaux apparaissant lors d'une demande de dialogue par l'esclave.
La figure 5 montre deux organigrammes représentant les logiciels de conduite du processus pour un départ, demandé respectivement par l'esclave ou par le maître.
La figure 6 montre deux organigrammes représentant les logiciels de conduite du processus, respectivement par l'esclave ou par le maître, pour scruter si l'autre veut communiquer.

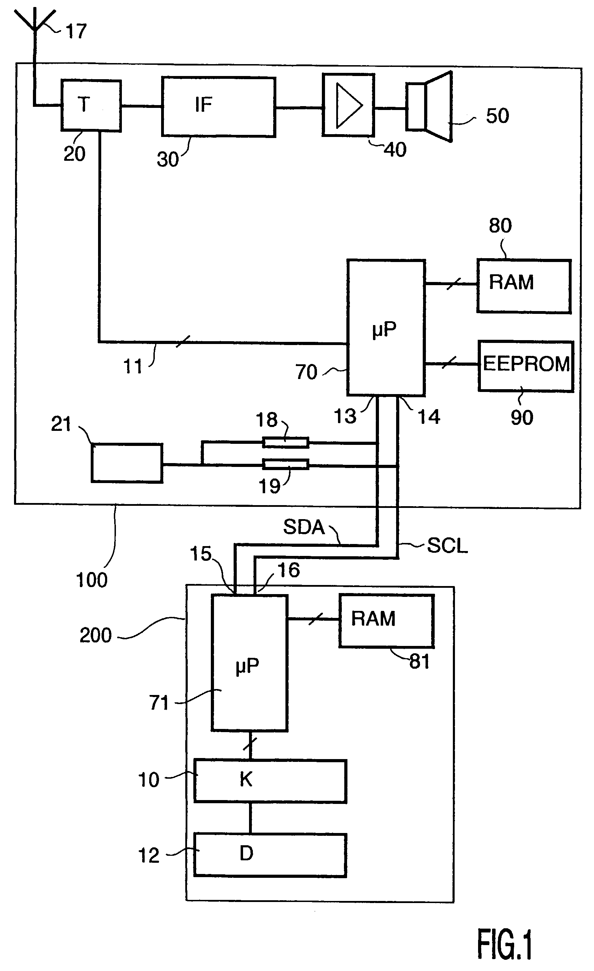

Le récepteur de radio de la figure 1 comporte, à partir d'une antenne 17, un élément 20 de type connu ("tuner") contenant un circuit de syntonisation et un circuit de changement de fréquence, suivi d'un élément 30 également de type connu contenant un amplificateur à fréquence intermédiaire et un démodulateur. La sortie de signal démodulé de l'élément 30 alimente un amplificateur audio 40 suivi d'un haut-parleur 50.

Dans les récepteurs modernes, on trouve aussi un microprocesseur 70 qui a de multiples rôles. Il est relié notamment :
- à une mémoire volatile 80 dite "RAM", pour le stockage d'éléments provisoires tels que des valeurs de calcul transitoires ou en général les valeurs que l'on ne souhaite pas conserver lorsque le contact du véhicule est coupé,
- à une mémoire permanente 90 de type dit "EEPROM", pour le stockage d'éléments définitifs ou momentanément définitifs, tels que les caractéristiques de stations que l'on désire pouvoir rappeler un jour ou l'autre.

La mémoire RAM 80 peut aussi être contenue dans le microprocesseur.
Le microprocesseur 70 est muni d'un élément de logiciel qui lui permet de fournir des valeurs numériques qui sont appliquées via une connexion 11 à une entrée de l'élément 20 pour sélectionner une fréquence de réception.
La mémoire EEPROM 90 peut contenir, par exemple, un tableau dans lequel sont enregistrés des données résultant de différentes opérations réalisées par le microprocesseur 70. Tous les éléments décrits ci-dessus sont contenus dans un boîtier 100.

Pour le dialogue avec l'utilisateur sont prévus un clavier de commande à la disposition de l'utilisateur et un afficheur, par exemple à cristaux liquides. Pour des raisons pratiques, ils sont contenus dans un boîtier 200 différent du boîtier 100.
Ce boîtier 200 renferme lui aussi, en dehors du clavier 10 et de l'afficheur 12, un microprocesseur 71 qui a de multiples rôles. Il est relié notamment à une mémoire volatile 81 dite "RAM", pour le stockage d'éléments provisoires tels que des valeurs de calcul transitoires ou en général les valeurs que l'on ne souhaite pas conserver lorsque le contact du véhicule est coupé. La mémoire RAM 81 peut aussi être contenue dans le microprocesseur.

Les boîtiers 100 et 200 sont reliés par un bus à deux conducteurs indiqués par SDA et SCL, qui relie les deux microprocesseurs 70, 71 entre eux.

Dans le dispositif de la figure 1, le boîtier 100 avec son microprocesseur 70 constitue une station maître permettant de gérer l'émission et la réception de données, avec une borne de données 13 et une borne d'horloge 14, et le boîtier 200 avec son microprocesseur 71 constitue une station esclave permettant aussi l'émission et la réception de données, avec une borne de données 15 et une borne d'horloge 16. Le conducteur de données SDA relie entre elles les bornes de données des microprocesseurs, et le conducteur d'horloge SCL relie entre elles les bornes d'horloge des microprocesseurs.
Des moyens sont prévus pour maintenir les conducteurs du bus à un premier niveau de tension en l'absence de forçage par les stations, à savoir des résistances 18 et 19 reliant chacun des conducteurs du bus à une source de tension 21 portée au dit premier niveau de tension. Chacun des microprocesseurs peut amener à un niveau bas la tension de chacun des conducteurs du bus, en tirant du courant au travers des résistances 18 ou 19.

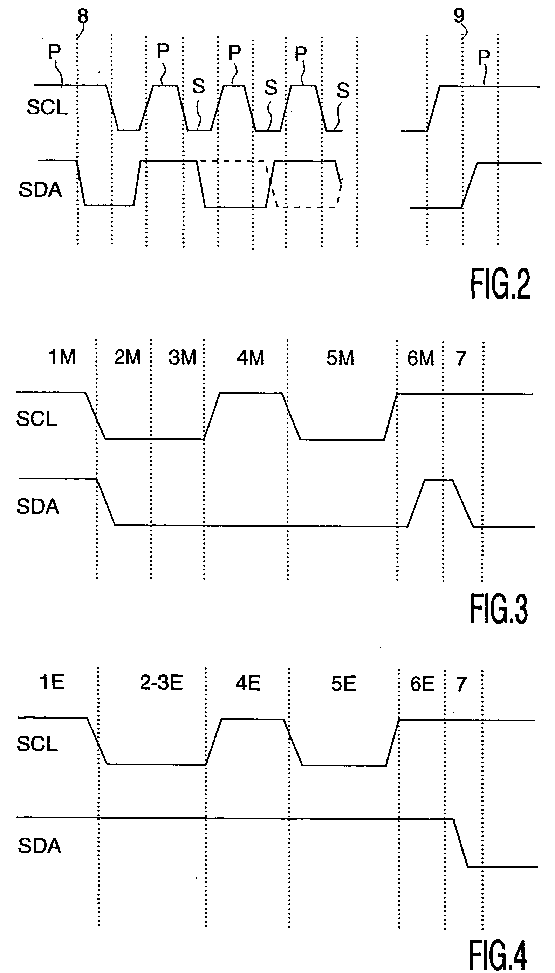

Dans la présente description, la procédure normale de transmission de données par le bus est essentiellement une procédure I²C connue. Il est clair néanmoins que l'invention peut s'appliquer à toute procédure analogue rapide et utilisant un bus à deux conducteurs. Pour mémoire, les phases essentielles d'une procédure I²C sont présentées par la figure 2 :
- avant l'envoi de données, un signal de départ est produit, indiquant que la station maître est prête à gérer la transmission de données. Ce signal consiste en ce que le conducteur de données SDA est laissé au premier niveau de tension pendant une première partie d'un intervalle où l'horloge est au premier niveau, indiqué par la lettre P la plus à gauche sur le dessin, puis est forcé au second niveau de tension au cours du même intervalle P, à partir de l'instant indiqué 8.
- ensuite, la station maître produit un signal d'horloge sur le conducteur d'horloge SCL en laissant sa borne au premier niveau de tension P pendant chacun des intervalles d'une série d'intervalles de temps successifs dits intervalles d'horloge, indiqués à chaque fois par la lettre P, et en forçant ce conducteur à un second niveau de tension S entre les dits intervalles, et
- des données binaires sont transmises par l'une ou l'autre des stations en laissant la tension sur le conducteur de données SDA au premier niveau de tension pendant un intervalle d'horloge entier, indiqué par P, pour transmettre une première valeur de donnée et en forçant la tension sur le conducteur de données SDA au second niveau de tension, également pendant un intervalle d'horloge entier, pour transmettre une seconde valeur de donnée. Ici par exemple une première valeur haute est transmise pendant le premier intervalle P rencontré après le signal de départ, puis une valeur basse et une valeur haute, une ligne en trait interrompu indiquant une autre possibilité à titre d'exemple.
- après l'envoi des données, un signal de fin est produit, indiquant que la station maître a terminé son dialogue. Ce signal consiste en ce que le conducteur de données SDA est forcé au second niveau de tension pendant une première partie d'un intervalle où l'horloge est au premier niveau, indiqué par la lettre P la plus à droite sur le dessin, puis en laissant ce conducteur au second niveau de tension au cours du même intervalle P, à partir de l'instant indiqué 9.

L'invention s'applique au cas de deux microprocesseurs susceptibles de communiquer. Au sens I²C, le maître est celui qui engendre l'horloge. Les deux éléments peuvent demander une communication mais un seul reste maître.

On se réfère maintenant à la figure 3. La procédure diffère de la procédure I²C parce que, avant la production du signal de départ de type I²C, dans le cas où c'est la station maître qui requiert un dialogue,
la station maître,
   - force, entre les temps indiqués 1M et 2M, sa borne d'horloge SCL puis sa borne de données SDA au second niveau de tension, dans cet ordre pour ne pas figurer un signal de départ,
   - maintient ensuite sa borne d'horloge au second niveau de tension pendant une première durée prédéterminée 2M et 3M, puis la laisse retourner au premier niveau en 4M,
la station esclave
   - teste si sa borne d'horloge et de données sont au second niveau de tension (2M et 3M), et en ce cas
   - détecte ensuite lorsque sa borne d'horloge retourne au premier niveau de tension (4M),
   - et force alors sa borne d'horloge au second niveau de tension pendant une seconde durée prédéterminée (5M) puis la laisse retourner au premier niveau (6M). La phase 5M est une sorte de réponse de la part de l'esclave.
et pendant ce temps la station maître
   - détecte que sa borne d'horloge est maintenue au second niveau de tension pendant la dite seconde durée prédéterminée 5M et qu'elle retourne ensuite au premier niveau,
   - et laisse alors sa borne de données retourner au premier niveau puis génère alors le dit signal de départ en 7.

On se réfère maintenant à la figure 4. Dans le cas où c'est la station esclave qui requiert un dialogue, la procédure est différente,
la station esclave,
   - force le conducteur d'horloge SCL au second niveau de tension, entre les temps lE et 2E (mais pas le conducteur de données),
   - maintient ensuite sa borne d'horloge au second niveau de tension pendant une troisième durée prédéterminée 2-3E, puis la laisse retourner au premier niveau au temps 4E,
la station maître
   - teste si le conducteur d'horloge SCL est au second niveau (bas) de tension, et en ce cas
   - recherche si le conducteur d'horloge retourne au premier niveau de tension, entre les temps 3E et 4E,
   - et force alors sa borne d'horloge au second niveau de tension pendant une quatrième durée prédéterminée 5E puis la laisse retourner au premier niveau, pour indiquer qu'il est prêt au dialogue demandé. La phase 5E est une sorte de réponse de la part du maître,
et le dit signal de départ est alors engendré (7).
et pendant ce temps la station esclave
   - recherche si sa borne d'horloge est maintenue au second niveau de tension pendant la dite quatrième durée prédéterminée 5E et si elle retourne ensuite au premier niveau en 6E, et attend alors le signal de départ 7 généré par le maître pour émettre des données.

Bien entendu pour démarrer une de ces procédures, il faut que le conducteur SDA soit préalablement au niveau haut, dit "premier niveau". Comme il n'y a qu'un maître, il est clair qu'il déclenche un dialogue seulement lorsqu'il n'est pas déjà occupé à dialoguer, donc la condition est nécessairement remplie, puisque dans le cas de la demande par l'esclave, ce dernier ne tire pas le conducteur SDA à zéro.

Chacun des microprocesseurs a plusieurs tâches différentes à accomplir. A cet effet, ils sont programmés pour exécuter systématiquement à tour de rôle toutes les tâches en question, par exemple concernant la gestion d'un système connu dit RDS pour "Radio Data System", ou la recherche de stations, ou la gestion de l'afficheur et/ou du clavier, etc. Parmi ces tâches il y a, pour le maître, celle consistant à scruter si SCL est à zéro, et pour l'esclave, celle consistant à scruter si SCL et SDA sont à zéro. Le programme amène de temps en temps les processeurs à exécuter ces scrutations. L'intervalle de temps entre deux scrutations n'est pas connu à l'avance, car il dépend du temps mis à exécuter d'autres tâches entre deux scrutations. Cet intervalle dépend aussi du type des microprocesseurs : il peut s'agir par exemple d'un microprocesseur de la famille dite 8051 pour le microprocesseur maître 70, et d'un microprocesseur TMP 47 C (de marque "Toshiba") pour le microprocesseur esclave 70. La -durée des tâches est limitée, et il a été constaté que le dispositif fonctionne de façon satisfaisante dans un autoradio et avec les microprocesseurs mentionnés, lorsque toutes les susdites durées prédéterminées sont de l'ordre d'une milliseconde.
Dans le cas où le microprocesseur de l'esclave serait occupé par d'autres tâches pendant plus d'une milliseconde, il ne pourrait pas voir la demande de dialogue du maître, auquel cas ce dernier s'en apercevrait, du fait de l'absence de la phase de réponse de l'esclave, et il recommencerait alors sa demande un peu plus tard. Ceci est vrai également mutatis mutandis dans le cas de la demande de dialogue par l'esclave.

On se réfère maintenant à nouveau à la figure 1.
- dans la station maître 100 :
   - le microprocesseur 70 produit en temps voulu un signal d'horloge sur le conducteur d'horloge en laissant ce conducteur au premier niveau de tension pendant chacun des intervalles d'une série d'intervalles de temps successifs dits intervalles d'horloge, et en forçant ce conducteur à un second niveau de tension entre les dits intervalles,
   - le microprocesseur 70 produit en temps voulu un signal de départ indiquant que la station maître est prête à gérer la transmission de données, en laissant le conducteur de données au premier niveau de tension pendant une première partie d'un intervalle d'horloge, et en forçant ce conducteur au second niveau de tension au cours du même intervalle,
   - le microprocesseur 70 produit en temps voulu un signal d'arrêt indiquant que la station maître a fini de gérer la transmission de données, en forçant le conducteur de données au second niveau de tension pendant une première partie d'un intervalle d'horloge et en laissant ce conducteur retourner au premier niveau de tension durant le même intervalle,
- dans chacune des stations :
   - le microprocesseur transmet s'il y a lieu des données binaires en laissant la tension sur le conducteur de données au premier niveau de tension pendant un intervalle d'horloge entier pour transmettre une première valeur de donnée et en forçant la tension sur le conducteur de données au second niveau de tension pendant un intervalle d'horloge entier pour transmettre une seconde valeur de donnée,
- afin de générer un signal de demande de dialogue de la part du maître, le microprocesseur 70 de la station maître comporte des moyens logiciels
   - pour, avant la production d'un signal de départ, forcer sa borne d'horloge 14 puis sa borne de données 13 au second niveau de tension,
   - pour maintenir ensuite sa borne d'horloge 14 au second niveau de tension pendant une première durée prédéterminée, puis la laisser retourner au premier niveau,
- afin de répondre à un signal de demande de dialogue de la part du maître, le microprocesseur 71 de la station esclave comporte des moyens logiciels
   - pour vérifier si sa borne d'horloge 16 et sa borne de données 15 sont au second niveau de tension,
   - pour détecter que sa borne d'horloge 16 est retournée au premier niveau de tension après avoir détecté qu'elle était au second niveau de tension,
   - et pour forcer alors sa borne d'horloge 16 au second niveau de tension pendant une seconde durée prédéterminée puis la laisser retourner au premier niveau ensuite,
- le microprocesseur 70 de la station maître comporte des moyens logiciels
   - pour, après la génération d'un signal de demande de dialogue de la part du maître, détecter que sa borne d'horloge 14 est maintenue au second niveau de tension pendant la dite seconde durée prédéterminée et qu'elle retourne ensuite au premier niveau,
   - et pour laisser alors sa borne de données 13 retourner au premier niveau
   et le dit signal de départ est alors engendré.

En outre, pour le cas où c'est l'esclave qui demande le dialogue :
- afin de générer un signal de demande de dialogue, le microprocesseur 71 de la station esclave comporte des moyens logiciels
   - pour, avant la production d'un signal de départ, forcer sa borne d'horloge 16 au second niveau de tension,
   - pour maintenir ensuite sa borne d'horloge 16 au second niveau de tension pendant une première durée prédéterminée, puis la laisser retourner au premier niveau,
- afin de répondre à un signal de demande de dialogue de la part de l'esclave, le microprocesseur 70 de la station maître comporte des moyens logiciels
   - pour vérifier si sa borne d'horloge 14 est au second niveau de tension,
   - pour détecter que sa borne d'horloge 14 est retournée au premier niveau de tension après avoir détecté qu'elle était au second niveau de tension,
   - et pour forcer alors sa borne d'horloge 14 au second niveau de tension pendant une seconde durée prédéterminée puis la laisser retourner au premier niveau ensuite,
- le microprocesseur 71 de la station esclave comporte des moyens logiciels
   - pour, après la génération d'un signal de demande de dialogue, détecter que sa borne d'horloge 16 est maintenue au second niveau de tension pendant la dite seconde durée prédéterminée et qu'elle retourne ensuite au premier niveau,
   - et pour laisser alors sa borne de données 15 retourner au premier niveau
   le dit signal de départ étant alors engendré par le maître.

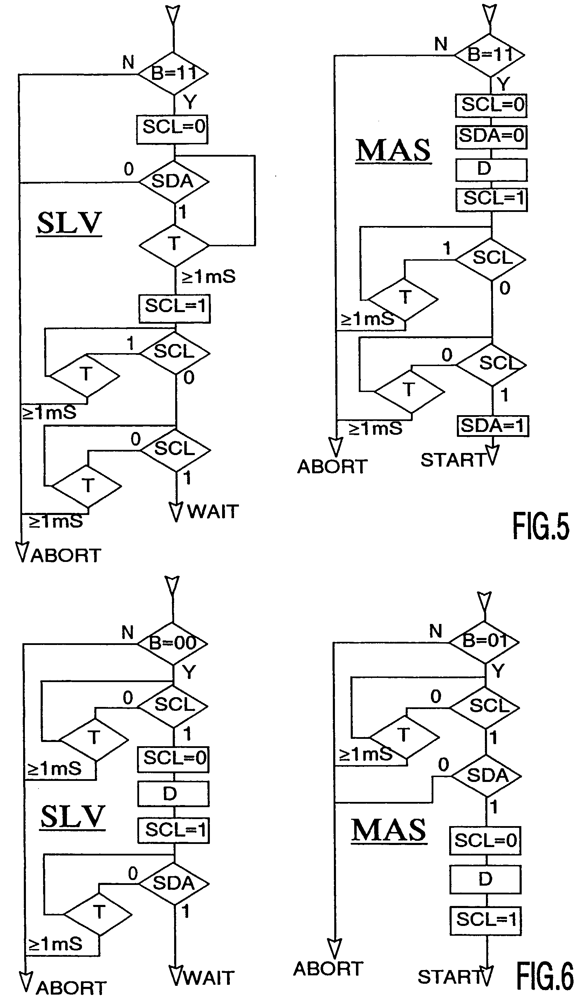

Pour générer la demande de dialogue, le maître utilise un logiciel qui est schématisé dans la partie droite de la figure 5.
Le départ du processus est figuré en haut de la figure. D'abord le microprocesseur du maître vérifie si les deux conducteurs SDA et SCL sont à 1, dans l'étape marquée B=11. Si c'est non, un aiguillage (N) conduit à l'annulation de la demande, notée ABORT. Si c'est oui (Y), le conducteur SCL est porté à zéro dans l'opération notée SCL=0, puis le conducteur SDA est porté à zéro dans l'opération notée SDA=0, puis un délai noté D est prévu, suivi par l'opération de mise à "un" du conducteur SCL, opération notée SCL=1. Ensuite, la valeur de la tension sur le conducteur SCL est testée. Si la tension est haute, un aiguillage noté 1 conduit à un autre test, noté T, dans lequel est vérifié si un temps prédéterminé est écoulé depuis l'opération SCL=1. Si ce n'est pas le cas, il y a retour au test précédent (SCL). Si c'est le cas, noté ">1mS" il y a abandon de la demande, indiqué par "ABORT". Si au cours du bouclage de T sur SCL, tant que le temps est inférieur à 1 mS, il est constaté que SCL=0, le processus mène à un second test sensiblement identique, sauf que les valeurs 0 et 1 pour SCL sont interverties. Si il y a sortie avec SCL=1, alors le conducteur SDA est mis à 1 dans l'opération "SDA=1", puis le processus de démarrage I²C est initié, ce qui est indiqué par "START".

Pour générer la demande de dialogue, l'esclave utilise un logiciel qui est schématisé dans la partie gauche de la figure 5.
D'abord le microprocesseur de l'esclave vérifie si les deux conducteurs SDA et SCL sont à 1, dans l'étape marquée B=11. Si c'est non, un aiguillage (N) conduit à l'annulation de la demande, notée ABORT. Si c'est oui (Y), le conducteur SCL est porté à zéro dans l'opération notée SCL=0. Ensuite, la valeur de la tension sur le conducteur SDA est testée. Si la tension est basse, un aiguillage 0 conduit à l'annulation de la demande, notée ABORT. Si la tension est haute, un test suivant est conduit, noté T, dans lequel est vérifié si un temps prédéterminé est écoulé depuis l'opération SCL=0. Si ce n'est pas le cas, il y a retour au test précédent (SDA). Si c'est le cas, noté ">1ms", le processus mène à l'opération marquée SCL=1 dans laquelle le conducteur SCL est porté au niveau haut. Ensuite les deux dernières opérations sont identiques à celles du cas précédent (partie de droite de la figure 5), sauf qu'à la fin l'esclave n'initie pas le signal de départ, mais attend celui du maître, ce qui est noté par WAIT.

Pour vérifier s'il y a demande de dialogue de la part de l'esclave, et y répondre éventuellement, le maître utilise un logiciel qui est schématisé dans la partie droite de la figure 6.
D'abord le microprocesseur du maître vérifie si le conducteur SDA est à 1 et le conducteur SCL est à 0, dans l'étape marquée B=01. Si c'est non, un aiguillage (N) conduit à l'annulation de la vérification, notée ABORT. Ensuite, la valeur de la tension sur le conducteur SCL est testée. Si la tension est basse, un aiguillage noté 0 conduit à un autre test, noté T, dans lequel est vérifié si un temps prédéterminé est écoulé depuis le test B=01. Si ce n'est pas le cas, il y a retour au test précédent (SCL). Si c'est le cas, noté ">1mS" il y a abandon noté "ABORT". Si au cours du bouclage de T sur SCL, tant que le temps est inférieur à 1 mS, il est constaté que SCL=1, la procédure conduit au test suivant, noté SDA, dans lequel la valeur de tension sur le conducteur SDA est vérifiée. Si elle est basse, l'aiguillage noté "0" conduit à l'annulation de la vérification, notée ABORT. Si elle est haute, ce qui est noté "1", le conducteur SCL est porté à tension basse, dans l'opération notée SCL=0, puis un délai noté D est prévu, suivi par l'opération de mise à "un" du conducteur SCL, opération notée SCL=1, puis le processus de démarrage I²C est initié, ce qui est indiqué par "START".

Pour vérifier s'il y a demande de dialogue de la part du maître, et y répondre éventuellement, l'esclave utilise un logiciel qui est schématisé dans la partie gauche de la figure 6.
D'abord le microprocesseur de l'esclave vérifie si les deux conducteurs SDA et SCL sont à 0, dans l'étape marquée B=00. Si c'est non, un aiguillage (N) conduit à l'annulation de la vérification, notée ABORT. Si c'est oui, la valeur de la tension sur le conducteur SCL est testée. Si la tension est basse, un aiguillage noté 0 conduit à un autre test, noté T, dans lequel est vérifié si un temps prédéterminé est écoulé depuis le test B=00. Si ce n'est pas le cas, il y a retour au test précédent (SCL). Si c'est le cas, noté ">1mS" il y a abandon noté "ABORT". Si au cours du bouclage de T sur SCL, tant que le temps est inférieur à 1 mS, il est constaté que SCL=1, le processus conduit à l'opération notée SCL=0 dans laquelle le conducteur SCL est porté à tension basse, puis un délai noté D est prévu, suivi par l'opération de mise à "un" du conducteur SCL, opération notée SCL=1. Ensuite, la valeur de la tension sur le conducteur SDA est testée. Si la tension est basse, un aiguillage noté 0 conduit à un autre test, noté T, dans lequel est vérifié si un temps prédéterminé est écoulé depuis l'opération SCL=1. Si ce n'est pas le cas, il y a retour au test précédent (SDA). Si c'est le cas, noté ">1mS" il y a abandon noté "ABORT". Si au cours du bouclage de T sur SDA, tant que le temps est inférieur à 1 mS, il est constaté que SDA=1, l'esclave attend alors le signal de départ du maître, noté par WAIT.

## Revendications

1. Procédure de transmission de données par bus à deux conducteurs, utilisée dans un dispositif comprenant
- une station maître permettant de gérer l'émission et la réception de données, avec une borne de données et une borne d'horloge,
- une station esclave permettant l'émission et la réception de données, avec une borne de données et une borne d'horloge,
- un conducteur de données qui relie entre elles les bornes de données des stations,
- un conducteur d'horloge qui relie entre elles les bornes d'horloge des stations,
- des moyens pour maintenir les conducteurs du bus à un premier niveau de tension en l'absence de forçage par les stations,
chacune des stations pouvant forcer un des conducteurs du bus à un deuxième niveau de tension, et la station maître pouvant produire un signal de départ, indiquant qu'elle est prête à gérer la transmission de données,
**caractérisé en ce que**,
avant la production d'un signal de départ,
la station maître
- force sa borne d'horloge puis sa borne de données au second niveau de tension,
- maintient ensuite sa borne d'horloge au second niveau de tension pendant une première durée prédéterminée, puis la laisse retourner au premier niveau,
la station esclave
- teste si sa borne d'horloge et sa borne de données sont au second niveau de tension, et en ce cas
- recherche ensuite lorsque sa borne d'horloge retourne au premier niveau de tension,
- et force alors sa borne d'horloge au second niveau de tension pendant une seconde durée prédéterminée puis la laisse retourner au premier niveau,
et pendant ce temps la station maître
- recherche si sa borne d'horloge est maintenue au second niveau de tension pendant la dite seconde durée prédéterminée et si elle retourne ensuite au premier niveau,
- et laisse alors sa borne de données retourner au premier niveau
et le dit signal de départ est alors engendré.

2. Procédure de transmission de données selon la revendication 1, **caractérisé en ce que**,
avant la production d'un signal de départ :
la station esclave
- force sa borne d'horloge au second niveau de tension,
- maintient ensuite sa borne d'horloge au second niveau de tension pendant une troisième durée prédéterminée, puis la laisse retourner au premier niveau,
la station maître
- teste si sa borne d'horloge est au second niveau de tension, et en ce cas
- recherche ensuite si sa borne d'horloge retourne au premier niveau de tension,
- et force alors sa borne d'horloge au second niveau de tension pendant une quatrième durée prédéterminée puis la laisse retourner au premier niveau,
et le dit signal de départ est alors engendré.
et pendant ce temps la station esclave
- recherche si sa borne d'horloge est maintenue au second niveau de tension pendant la dite quatrième durée prédéterminée et si elle retourne ensuite au premier niveau,
- et attend alors le signal de départ généré par le maître pour émettre des données en synchronisme avec l'horloge générée par le maître.

3. Dispositif de transmission de données par bus comprenant :
- une station maître comportant un microprocesseur, permettant de gérer l'émission et la réception de données, avec une borne de données et une borne d'horloge,
- une station esclave comportant un microprocesseur, permettant l'émission et la réception de données, avec une borne de données et une borne d'horloge,
- un conducteur de données qui relie entre elles les bornes de données des stations,
- un conducteur d'horloge qui relie entre elles les bornes d'horloge des stations,
- des moyens pour maintenir les conducteurs du bus à un premier niveau de tension en l'absence de forçage par les stations,
- dans chacune des stations, des moyens pour forcer un des conducteurs du bus à un deuxième niveau de tension, et
- dans la station maître, des moyens pour produire un signal de départ indiquant qu'elle est prête à gérer la transmission de données,
**caractérisé en ce que**,
- afin de générer un signal de demande de dialogue, le microprocesseur de la station maître comporte des moyens logiciels
- pour forcer sa borne d'horloge puis sa borne de données au second niveau de tension,
- pour maintenir ensuite sa borne d'horloge au second niveau de tension pendant une première durée prédéterminée, puis la laisser retourner au premier niveau,
- afin de répondre à un signal de demande de dialogue de la part du maître, le microprocesseur de la station esclave comporte des moyens logiciels
- pour vérifier si sa borne d'horloge et sa borne de données sont au second niveau de tension,
- pour détecter que sa borne d'horloge est retournée au premier niveau de tension après avoir détecté qu'elle était au second niveau de tension,
- et pour forcer alors sa borne d'horloge au second niveau de tension pendant une seconde durée prédéterminée puis la laisser retourner au premier niveau ensuite,
- le microprocesseur de la station maître comporte en outre des moyens logiciels
- pour, après avoir généré le signal de demande de dialogue, détecter que sa borne d'horloge est maintenue au second niveau de tension pendant la dite seconde durée prédéterminée et qu'elle retourne ensuite au premier niveau,
- et pour laisser alors sa borne de données retourner au premier niveau puis engendrer alors le dit signal de départ.

4. Dispositif de transmission de données selon la revendication 3,
**caractérisé en ce que**,
- afin de générer un signal de demande de dialogue, le microprocesseur de la station esclave comporte des moyens logiciels
- pour forcer sa borne d'horloge au second niveau de tension,
- pour maintenir ensuite sa borne d'horloge au second niveau de tension pendant une première durée prédéterminée, puis la laisser retourner au premier niveau,
- afin de répondre à un signal de demande de dialogue de la part de l'esclave, le microprocesseur de la station maître comporte des moyens logiciels
- pour vérifier si sa borne d'horloge est au second niveau de tension,
- pour détecter que sa borne d'horloge est retournée au premier niveau de tension après avoir détecté qu'elle était au second niveau de tension,
- et pour forcer alors sa borne d'horloge au second niveau de tension pendant une seconde durée prédéterminée puis la laisser retourner au premier niveau ensuite,
et le dit signal de départ est alors engendré.
- le microprocesseur de la station esclave comporte des moyens logiciels
- pour, après avoir généré un signal de demande de dialogue, détecter que sa borne d'horloge est maintenue au second niveau de tension pendant la dite seconde durée prédéterminée et qu'elle retourne ensuite au premier niveau,
- pour détecter alors le signal de départ généré par le maître et pour émettre ensuite des données en synchronisme avec l'horloge générée par le maître.

5. Récepteur de radio pour automobile, **caractérisé en ce qu'**il est muni d'un dispositif selon l'une des revendications 3 ou 4.
